# EUROPEAN PATENT APPLICATION

(11) **EP 0 723 798 A1**
(43) Date of publication of application: **31.07.1996**
(21) Application number: 96300530.1
(22) Date of filing: 25.01.1996
(51) Int. Cl.: B01D 33/11

(54) **Inlet fluid control**

(30) Priority: 25.01.1995 GB 9501407
(71) Applicant: QED INTERNATIONAL LIMITED, Huntly, Aberdeenshire AB54 4PT (GB)
(72) Inventor: Murray, Alastair S., Huntly, Aberdeenshire AB54 4PT (GB)
(74) Representative: O'Connell, David Christopher

(57) **Abstract**

A trommel, particularly suitable for use as a swarf removal trommel, is provided with means for reducing the velocity of inlet fluid. In addition, there is an arrangement for helping to clear the meshes of the trommel by blowing compressed air or other fluid through them.

## Description

The present invention relates to inlet fluid control arrangements, particularly for use in connection with a trommel, such as a swarf removal trommel.

A trommel for use in removing swarf from drilling muds is described in WO94/24411, the contents of which are incorporated herein by reference.

That device is intended for use, for example, during "deviation drilling" for oil and gas, in which a hole is made in the casing of an existing well, and drilling takes place at an angle to the existing well. To accomplish this, large sections of drill casing are milled away, and, during this process, the returning drilling mud contains large quantities of swarf from the well casing, and these must be removed. While the prior art device mentioned above works satisfactorily, it is not able to handle very high flow rates of the drilling mud.

The present invention seeks at least to alleviate this disadvantage of the known device.

According to a first aspect of the present invention, there is provided a trommel, having an inlet for connection to a supply of a liquid with an entrained solid component, and having means located in said inlet for reducing the velocity of fluid to be supplied to the trommel.

Preferably, the trommel comprises means located within the trommel adjacent the inlet thereto, for reducing the velocity of inlet fluid.

Preferably, the trommel has an inlet pipe connected to its upper end, and further comprises means located in the inlet pipe for reducing the velocity of fluid along the pipe.

This has the advantage that fluid entering the trommel is travelling more slowly, and so is more likely to pass through the meshes of the trommel.

Preferably, the trommel according to the first aspect of the invention further comprises means for forcing a fluid through the meshes thereof.

According to a second aspect of the present invention, there is provided a swarf removal trommel comprising at least one rotatable drum having a plurality of apertures therein, and further comprising means for directing a flow of fluid on to the drum for cleaning said apertures.

This has the further advantage that the meshes are cleared of trapped swarf, and allows liquids to pass through the meshes more easily.

According to a third aspect of the present invention, there is provided a method of removing swarf from drilling muds, using a trommel in accordance with the first or second aspect of the invention.

According to a fourth aspect of the present invention, there is provided a method of removing solid particles from liquids, or alternatively of grading solid particles, in an underwater environment, using a trommel in accordance with the first aspect of the invention.

For a better understanding of the present invention, and to show how it may be put into effect, reference will now be made, by way of example, to the accompanying drawings, in which:
Figure 1 is a partially cut-away side view of a trommel inlet;
Figure 2 is an end view on arrow A of the arrangement shown in Figure 1;
Figure 3 is a side view of a trommel in accordance with the invention;
Figure 4 shows a fluid supply pipe forming part of the trommel shown in Figure 3; and
Figure 5 is a sectional view through the trommel along line V-V in Figure 3.

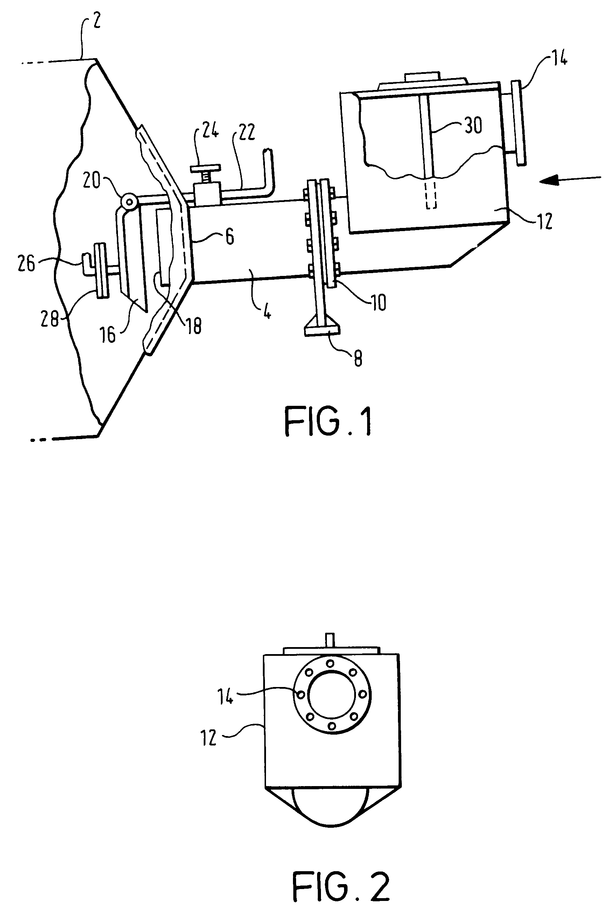

Figure 1 shows the inlet of a trommel. A trommel of this type may advantageously be used as a swarf removal trommel. As described in WO94/24411, the trommel comprises two drums formed from cylindrical screens, which are mounted coaxially about an inclined axis. The inner screen is formed of a relatively coarse mesh, while the outer screen is formed of a relatively fine mesh. The mesh sizes can of course be chosen in accordance with the desired use of the equipment. The drums are then rotated, and fluid, for example drilling muds containing entrained swarf particles, is caused to enter at the upper end of the trommel.

Alternatively, a trommel of this type may also be used advantageously in an underwater environment. In some circumstances, it is advantageous to be able to remove solid particles from sea water on the seabed. For example, it may be desired to clear debris from the seabed, and it is then necessary to separate the debris from the sea water. Further, it may also be desirable to be able to classify solid particles in an underwater environment, that is, to separate those solid particles with sizes in a particular range. The trommel described herein may be used for these purposes by pumping the water, with the entrained solid particles, to the inlet of the trommel. When the equipment is to be used for grading or classifying the solid particles, then obviously the mesh sizes of the screens must be chosen appropriately, for example such that the particles within the particular range pass through the inner screen, but are retained on the outer screen.

As shown in Figure 1, the trommel 2 has a feed tube 4 connected to the inlet 6 thereof. The feed tube 4 is connected through a mounting flange 8 to the mounting flange 10 of a feed box 12. Alternatively, this section may have a one-piece costruction, such that the feed tube 4 is connected directly to the feed box 12, with no intermediate flanges. The feed box 12 has an inlet flange 14, for connection to a supply of the fluid which is to be handled. For example, the trommel may be located on the seabed, and the inlet flange may be connected to a pump, which supplies sea water, containing solid particles. As another example, the inlet flange may be connected to a pump, which supplies drilling mud for recycling, containing swarf particles which are to be removed.

Use of the prior art equipment shown in WO94/24411 has shown that the equipment is effective at removing swarf or other solid particles entrained in the flow of fluid, but has indicated a problem in that some of the fluid, which it is normally intended to recycle, passes over the screens, rather than through them, and is lost to the process. The present invention proceeds from the realisation that this problem arises not from the volume of fluid being handled, but from the velocity at which this fluid is travelling on entry into the trommel. Aspects of the present invention therefore provide different means for slowing the fluid at this point. These means may be provided at any point in the inlet of the trommel, for example at the point at which the feed tube of the trommel is connected to the supply of fluid, or at the upper end of the drums themselves, or at any point in between.

Figure 1 shows a diffuser plate 16 mounted adjacent to the outlet 18 of the feed tube 4. The diffuser plate 16 is mounted at a pivot point 20 to one or more control rods 22, fixedly mounted to the feed tube 4. A locking screw 24 ensures that the or each control rod 22 is held at a fixed position relative to the feed tube 4. Thus, adjustment of the control rod 22 and locking screw 24 allows the position of the diffuser plate 16 to be adjusted relative to the outlet 18 of the feed tube 4.

A carrier pin 26 is mounted to the back of the diffuser plate 16, that is the side opposite the side at which fluid approaches the diffuser plate 16. The carrier pin 26 provides a means for attachment of counterweights 28. Conveniently, conventional pipe flanges may be used as these counterweights, as they will generally be readily available in the circumstances of use of a swarf removal trommel. However, any suitable heavy object may be used. By adjusting the number of counterweights 28 on the carrier pin 26, the ability of the diffuser plate 16 to slow down the fluid can be adjusted.

A further means for decelerating the fluid flow is provided before the inlet to the trommel 2. Specifically, the feed box 12 which is mounted in the fluid inlet path includes a fixed plate 30, which defines a labyrinthine fluid flow path within the feed box. This reduces the velocity of inlet fluid, which is slowed when it strikes the plate 30, and then passes below the plate and along the feed tube 4 at reduced velocity.

The combination of the feed box tube and the plate 30, together with the diffuser plate 16, is very effective in slowing the incoming fluid, and in preventing surges of fluid. The result is that incoming fluid is travelling sufficiently slowly over the meshes in the trommel to allow the fluid to pass through the meshes, such that it can be recycled. This allows a relatively short trommel to handle high fluid flow rates. It will be noted that either of the upstream device, namely the feed box 12 and plate 30, or the downstream device, namely the diffuser plate 16, can be used separately, and without the other device, although particularly good results are achieved by using the two devices in combination.

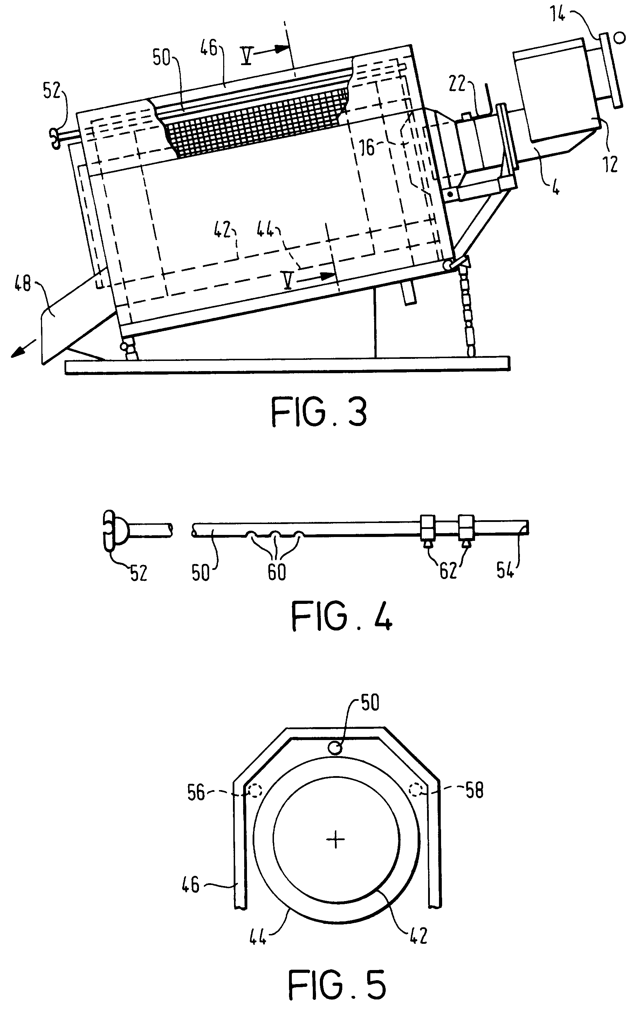

Figure 3 shows, in partially cut-away section, a trommel, particularly suitable for use as a swarf removal trommel, in accordance with the invention. In addition to the two devices described earlier for decelerating the incoming fluid, the trommel shown in Figure 3 includes a further feature which allows it more easily to handle high fluid flow rates.

The trommel shown in Figure 3 has an inner drum 42, formed of a relatively coarse mesh, and an outer drum 44, formed of a relatively fine mesh. The drums 42, 44 are surrounded by a cover 46. In use of the trommel, swarf which is retained on either of the drums 42, 44 falls through an outlet 48, while drilling mud which has passed through the drums is collected at the bottom of the device.

In accordance with one aspect of the invention, the trommel shown in Figure 3 includes a pipe 50, located above the drums 42, 44, between the outer drum 44 and the covers 46. The pipe 50 may be connected at one end 52 to a supply of compressed air, and is closed at the other end 54. Figure 5 shows a possible alternative arrangement, having three such pipes, with the positions of the second and third pipes being shown in dashed lines and represented by reference numerals 56, 58. The pipe 50, or each of the pipes, has a large number of holes, which may for example be 2 mm square, drilled in it. The holes 60 extend along the whole length of the pipe. As an alternative, and also shown in Figure 4, the pipe may be fitted with a number of clamp-on air nozzles 62, again extending along the whole length of the pipe.

The pipe 50 is positioned such that it is close to the outer mesh screen 44, with the hole 60 directed towards the screen 44. High pressure air is then passed in to the inlet 52 of the pipe 50, and high pressure jets of air are forced through the holes 60. These keep the mesh screens 44 clear of the viscous drilling fluid, and also help to remove fine pieces of swarf which may have become trapped in the mesh. By helping to clear the meshes in this way, this modification increases the efficiency of the device in ensuring that all of the swarf is removed, while minimising the amount of drilling fluid which is retained on the meshes.

The use of the pipe 50 has been described above with air as the fluid which is used to clear the meshes. However, it should be noted that any fluid may be used in the same way, provided that the resulting dilution or contamination of the drilling fluid which is to be recycled would not cause any harm.

In addition, when the trommel as described herein is to be used underwater, it may be most convenient for the fluid, which is to be supplied under pressure to clean the screens, to be sea water.

It should be noted that the advantages arising from the use of the pipe 50 can be achieved either together with or separately from the advantages resulting from the use of a device to decelerate the flow of liquid into the trommel, but that the combination of the two techniques is particularly advantageous.

## Claims

1. A trommel, having an inlet for connection to a supply of a fluid having solid particles entrained therein, and having means located in said inlet for reducing the velocity of fluid to be supplied to the trommel.

2. A trommel as claimed in claim 1, comprising an inlet pipe connected to an upstream end of a rotating section of the trommel, and comprising means located at the downstream end of the inlet pipe for reducing the velocity of fluid as it leaves the pipe.

3. A trommel as claimed in claim 1, comprising an inlet pipe connected to an upstream end of a rotating part of the trommel, and further comprising means located at the upstream end of the inlet pipe for reducing the velocity of fluid being supplied to the trommel.

4. A trommel as claimed in claim 2, further comprising a diverter located adjacent the downstream end of the inlet pipe.

5. A trommel as claimed in claim 4, wherein the diverter is pivotally mounted relative to the inlet pipe.

6. A trommel as claimed in claim 4 or claim 5, wherein the position of the diverter is adjustable relative to the end of the inlet pipe.

7. A trommel as claimed in claim 5 or claim 6, wherein the moment of inertia of the diverter about its pivot point is adjustable.

8. A trommel as claimed in claim 3, comprising means located in said inlet pipe defining a labyrinthine fluid flow path.

9. A trommel comprising at least one rotatable drum having a plurality of apertures therein, and further comprising means for directing a flow of fluid on to the drum for cleaning said apertures.

10. A trommel as claimed in claim 9, wherein the means for diverting a flow of fluid comprises an apertured pipe located adjacent to the drum.

11. A trommel as claimed in claim 10, wherein the aperture pipe is connected to a supply of compressed air.

12. A method of removing swarf from a fluid, comprising supplying the swarf-containing fluid to a trommel as claimed in any of claims 1 to 11.

13. A method of separating solid particles from sea water, or grading solid particles in sea water, comprising locating a trommel, as claimed in any of claims 1 to 11, on the seabed, and pumping the sea water to the inlet of the trommel.
